# EUROPÄISCHE PATENTSCHRIFT

(11) **EP 2 357 465 B1**
(45) Veröffentlichungstag und Bekanntmachung des Hinweises auf die Patenterteilung: **30.11.2022**
(21) Anmeldenummer: 11152068.0
(22) Anmeldetag: 25.01.2011
(51) Int. Cl.: G01N 21/47, G01N 21/64, G01N 21/59, G01N 21/17, G01J 3/04, G01J 3/02, G01J 1/04

(54) **Vorrichtung zur Bestimmung der Photolumineszenzquantenausbeute und weiterer optischer Eigenschaften einer Probe**
Device for determining the photoluminescence quantum yield and other optical characteristics of a sample
Dispositif de détermination du rendement quantique de photoluminescence et autres propriétés optiques d'un échantillon

(30) Priorität: 25.01.2010 DE 102010001189
(43) Veröffentlichungstag der Anmeldung: 17.08.2011
(73) Patentinhaber: BAM Bundesanstalt für Materialforschung und -prüfung, 12205 Berlin (DE)
(72) Erfinder: Resch-Genger, Ute, 12203 Berlin (DE); Hoffmann, Katrin, 12524 Berlin (DE); Lochmann, Cornelia, 10715 Berlin (DE); Würth, Christian, 10245 Berlin (DE)
(74) Vertreter: Zimmermann & Partner Patentanwälte mbB

(56) Entgegenhaltungen:
- WO-A1-2009/050536
- GB-A- 2 181 268
- GB-A- 2 312 295
- US-A- 2 992 588
- US-A1- 2004 133 086
- FRIEBEL M ET AL: "Determination of optical properties of human blood in the spectral range 250 to 1100 nm using Monte Carlo simulations with hematocrit-dependent effective scattering phase functions", JOURNAL OF BIOMEDICAL OPTICS SPIE USA, Bd. 11, Nr. 3, 34021, Mai 2006 (2006-05), Seiten 1-10, XP002635212, ISSN: 1083-3668

## Beschreibung

Die vorliegende Erfindung betrifft eine Vorrichtung zur Bestimmung der Photolumineszenzquantenausbeute und weiterer optischer Eigenschaften einer Probe, insbesondere betrifft die vorliegende Erfindung einen rückführbaren Ulbrichtkugel-Messplatz für die Bestimmung der absoluten Photolumineszenzquantenausbeute und weiterer optischer Eigenschaften wie beispielsweise Absorption, Reflexion, Transmission, Streukoeffizient und Anisotropie für flüssige bzw. feste transparente bzw. streuende Proben.

Zur genauen Charakterisierung von Proben müssen neben der Photolumineszenzquantenausbeute häufig weitere optische Parameter bestimmt werden. Die Photolumineszenzquantenausbeute (auch Quantenausbeute oder Quanteneffizienz genannt) beschreibt das Verhältnis zwischen der Anzahl der emittierten und absorbierten Photonen einer Probe. Die Quantenausbeute ist unter anderem für die Charakterisierung von optischen Materialien und Bauteilen, beispielsweise für Licht emittierende Dioden (LED), absorbierende und lumineszierende Schichten bzw. Filme sowie Volumenmaterialien, organische sowie anorganische Luminophore und lumineszente Hybridmaterialien diverser Erscheinungsform von Bedeutung wie z. B.: lumineszente organische Moleküle in Lösung, feste organische bzw. anorganische Matrices sowie auf Oberflächen, organische bzw. anorganische Konvertermaterialien diverser Erscheinungsform (Pulver, Schichten, Presslinge, Kompositmaterialien), Chromophor dotierte Gläser, lumineszente Hydrogele und Polymere, Phantome, Zellen, Zellsuspensionen, Gewebe, Kontrastmittel, UpConversion-Materialien, Übergangsmetallionenkomplexe wie z.B. Ru(II)-, Os(II), Ir(II)-, Pt(II)-Verbindungen, Lanthanid-Verbindungen, Halbleitermaterialien, nanokristalline Materialien wie Quantum Dots mit größenabhängigen optischen Eigenschaften, Silizium-Nanokristalle, Carbon Nanotubes, emissive anorganische und organische Partikel und Hybridmaterialien mit Größen im Nanometer- bis Mikrometerbereich, emissive Metallpartikel, Core-shell-Systeme, UpConversion-Phosphore, Phosphore, fluoreszierende Gläser oder Sol-Gel-Materialien, emissive Zeolithmaterialien, sowie Referenzmaterialien etc.

Die Quanteneffizienz ist dabei für solche z. B. oben genannte Emitter in verschiedenen Matrices von Interesse. Dies gilt in analoger Weise auch für die Quantenausbeute anderer Lumineszenzphänomene wie z. B. Chemo- oder Elektrolumineszenz.

Es ist bekannt, die Photolumineszenzquantenausbeute durch Einstrahlung von Anregungslicht auf eine Probe und nachfolgender Messung der von der Probe gestreuten bzw. reemittierten Strahlung zu bestimmen. Da die von der Probe gestreute bzw. reemittierte Strahlung die Probe nicht gerichtet verlässt, wird diese Strahlung mittels einer Ulbricht-Kugel gesammelt und anschließend mit einem spektral auflösenden Detektor untersucht. Eine Ulbricht-Kugel ist eine innen diffus reflektierende Hohlkugel, in deren Oberfläche mindestens eine Lichteintrittsöffnung und eine Austrittsöffnung vorhanden sind. Die Durchmesser der Öffnungen sind deutlich kleiner als der Innendurchmesser der Kugel, so dass nur solches Licht in die Austrittsebene gelangt, das zuvor vielfach an der inneren Oberfläche reflektiert worden ist. Die Gesamtfläche aller Öffnungen beträgt vorzugsweise kleiner 15 % der Gesamtfläche, bevorzugter kleiner 10 % der Gesamtfläche und noch bevorzugter kleiner 5 % der Gesamtfläche. Als Messlichtquelle werden häufig Laser sowie Xenon- oder Halogenlampen und ein Monochromator bzw. Filter zur Selektierung der gewünschten Wellenlängenintervalle verwendet. Als Monochromator kommen Filtermonochromatoren oder Gittermonochromatoren in Betracht. Das monochromatische Licht wird möglichst homogen auf die Probe geleitet.

Die Messung des Signals, also der von der Probe gestreuten bzw. reemittierten und an der Innenseite der Ulbricht-Kugel mehrfach diffus reflektierten Strahlung, erfolgt optional mit Lock-in-Verstärkern zur Verbesserung des Signal-Rausch-Verhältnisses.

GB 2 181 268 A offenbart ein Spektrophotometer mit austauschbaren Integrationssphären. US 2 992 588 A offenbart eine Photometer-Reflexionseinheit. Moritz Friebel et al. (2006) beschreiben im J. Biomedical Optics 11(3) pp. 034021-1 bis 034021-10 die Bestimmung der optischen Eigenschaften von menschlichem Blut im Spektralbereich von 250 bis 1100 nm unter Verwendung von Monte-Carlo-Simulationen mit hämatokritabhängigen effektiven Streuphasenfunktionen. GB 2 312 295 A offenbart eine Integrationssphäre für die spektroskopische Analyse mit Reflektor und Prallelement (baffle). WO 2009/050536 A1 beschreibt eine Integrationssphäre für die optische Analyse lumineszenten Materials und US 2004/0133086 A1 offenbart eine Vorrichtung und ein Verfahren zur nicht-invasiven Messung von Blutbestandteilen umfassend eine Integrationssphäre.

Nachteilig an den bekannten Vorrichtungen zur Bestimmung der Photolumineszenzquantenausbeute ist jedoch, dass diese nicht zur Bestimmung weiterer, relevanter optischer Parameter wie Reflexion und Transmission verwendet werden können. Jedoch sind zur Charakterisierung vieler Proben insbesondere die Bestimmung von Reflexion und Transmission notwendig, da aus den gemessenen Reflektions- und Transmissionsspektren weitere wichtige optische Parameter wie Absorptionskoeffizient (µa), Streukoeffizient (µs) und der Anisotropiefaktor (g) - beispielsweise durch eine Monte Carlo Simulation - ermittelt werden können.

Nach dem Stand der Technik sind zur Bestimmung von Quantenausbeute, Reflexion und Transmission daher mindestens zwei unterschiedliche Messsysteme erforderlich, was zu einem signifikanten Kostennachteil führt. Sofern ein zur Bestimmung der Quantenausbeute geeignetes Messsystem auch zur Bestimmung von Reflexion und Transmission verwendet werden soll, würde dies zu einem erheblichen Umbau- und Kalibrieraufwand zwischen den Messungen führen. Ferner werden zuverlässige und reproduzierbare Messergebnisse durch das ständige Umbauen der Messvorrichtung durch Einflüsse von z. B. unterschiedlich großen Messflecken, unterschiedlich beleuchteten Probenarealen, Positionierung der Probe, nicht mehr gültige Kalibrierung des Messaufbaus etc. nicht zu gewährleisten.

Es ist daher Aufgabe der vorliegenden Erfindung, eine Vorrichtung anzugeben, mit denen neben der Bestimmung der Quantenausbeute auch eine Bestimmung der Reflexion und Transmission einer Probe schnell, kostengünstig und zuverlässig realisiert werden können.

Die Erfindung ist in Anspruch 1 definiert. Bevorzugte Ausführungsformen sind in den abhängigen Ansprüchen definiert.

Die Grundidee der Erfindung besteht darin, ein Messsystem zur Verfügung zu stellen, mit dem sowohl die Quantenausbeute einer Probe als auch deren Reflexion und Transmission mit hoher Genauigkeit bestimmt werden können. Dabei sollen die genannten Parameter weiterhin mit hoher Geschwindigkeit bestimmt werden können. Aus den bestimmten Reflektions- und Transmissionsspektren können erfindungsgemäß weitere optische Parameter wie Absorptionskoeffizient (µa), Streukoeffizient (µs) und/oder der Anisotropiefaktor (g) bestimmt werden.

Dazu weist die erfindungsgemäße Vorrichtung eine Messlichtquelle, eine Ulbricht-Kugel, einen Probenhalter, der geeignet ist, eine Probe im Mittelpunkt der Ulbricht-Kugel zu halten, und einen spektral auflösenden Detektor auf, wobei die Ulbricht-Kugel eine erste Öffnung zur Einstrahlung von Messstrahlung, eine davon beabstandete, zweite Öffnung zur Einstrahlung von Messstrahlung und eine dritte Öffnung zur Auskopplung eines Messsignals aufweist, wobei der spektral auflösende Detektor mit der dritten Öffnung verbunden ist, und wobei ein erster Spiegel, ein zweiter Spiegel und ein dritter Spiegel vorgesehen sind, und der erste Spiegel und der zweite Spiegel in Bezug auf die Ulbricht-Kugel fixiert sind und der dritte Spiegel drehbar gelagert ist, und wobei erster Spiegel, zweiter Spiegel und dritter Spiegel derart angeordnet sind, dass das von der Messlichtquelle emittierte Licht in einer ersten Winkelstellung des dritten Spiegels vom dritten Spiegel zum ersten Spiegel und nachfolgend vom ersten Spiegel durch die erste Öffnung in die Ulbricht-Kugel reflektiert und in einer zweiten Winkelstellung des dritten Spiegels vom dritten Spiegel zum zweiten Spiegel und nachfolgend vom zweiten Spiegel durch die zweite Öffnung in die Ulbricht-Kugel reflektiert wird.

Aufgrund des drehbaren Spiegels kann das von der Messlichtquelle emittierte Licht je nach Stellung dieses drehbaren dritten Spiegels über zwei unterschiedliche Öffnungen in die Ulbricht-Kugel eingekoppelt werden. Der drehbare dritte Spiegel ermöglicht somit ein schnelles Umschalten zwischen einer ersten Messung mit einer direkten Beleuchtung der Probe (Einkoppeln über zweite Öffnung, nachfolgend auch als Messstrahl bezeichnet) und einer zweiten Messung mit einer bzgl. der Quantenausbeute- und Reflexionsbestimmung indirekten Beleuchtung der Probe (Einkoppeln über erste Öffnung, nachfolgend auch als Referenzstrahl bezeichnet).

Dadurch können je nach Positionierung der Probe sowohl die Quantenausbeute (Probe befindet sich im Bereich des Mittelpunktes der Ulbricht-Kugel), die Reflexion (Probe bildet die der zweiten Öffnung gegenüberliegende Innenseite der Ulbricht-Kugel) oder die Transmission (Probe befindet sich in bzw. im Bereich der zweiten Öffnung der Ulbricht-Kugel) mit einer hohen Genauigkeit bestimmt werden.

Aufgrund der Verwendung eines Messstrahls und eines Referenzstrahls für die Messungen zur Bestimmung der Quantenausbeute und der Reflexion kann eine derart hohe Messgenauigkeit erzielt werden, dass keine weiteren Umbauten erforderlich sind. Daher ist es möglich, die Probe zur jeweiligen Messung von Quantenausbeute, Reflexion und Transmission jeweils in der erfindungsgemäßen Messvorrichtung anzuordnen und die genannten Parameter mit hoher Genauigkeit ohne weitere Umbaumaßnahmen, also auch mit hoher Geschwindigkeit zu bestimmen.

Dazu sind zweiter Spiegel und dritter Spiegel in der zweiten Winkelstellung derart zur Messlichtquelle und zur zweiten Öffnung der Ulbricht-Kugel angeordnet, dass das von der Messlichtquelle emittierte Licht in den Mittelpunkt der Ulbricht-Kugel eingestrahlt wird (dadurch erfolgt eine direkte Beleuchtung der mittels eines Probenhalters dort oder auf der plan mit der Innenseite abschließenden in der Verlängerung des Messstrahls angeordneten Probe zur Bestimmung der Quantenausbeute bzw. der Reflexion), wohingegen erster und dritter Spiegel in der ersten Winkelstellung derart zu Messlichtquelle und erster Öffnung der Ulbricht-Kugel angeordnet sind, dass das von der Messlichtquelle emittierte Licht nicht in den Mittelpunkt der Ulbricht-Kugel, sondern in einen peripheren Punkt auf der Innenseite der Ulbricht-Kugel eingestrahlt wird (dadurch erfolgt eine indirekte Beleuchtung der mittels eines Probenhalters in der Mitte oder auf der plan mit der Innenseite abschließenden in der Verlängerung des Messstrahls angeordneten Probe zur Bestimmung der Quantenausbeute bzw. der Reflexion). Vorzugsweise wird zur weiteren Erhöhung der Messgenauigkeit in demjenigen Punkt auf der Innenseite der Ulbricht-Kugel (periphere Punkt), auf den das von der Messlichtquelle emittierte Licht über den ersten und dritten Spiegel eingestrahlt wird, eine zusätzliche (sechste) Öffnung (auch Referenzport 3 genannt) optional mit einem Referenzdetektor angeordnet, um die Intensität des Referenzstrahles zu überprüfen.

Optional ist zwischen dem ersten Spiegel und der ersten Öffnung der Ulbricht-Kugel ein Spalt angeordnet, mit dem die Intensität des bereits vorkollimierten Strahls im indirekten Beleuchtungsstrahlengang (Reflexion, Quantenausbeute) weiter dem Messstrahl angepasst werden kann. Zwischen dem zweiten Spiegel und der zweiten Öffnung der Ulbricht-Kugel kann ein optionales Linsensystem zur Fokussierung des vorkollimierten Strahls angeordnet werden.

Vorzugsweise ist eine vierte Öffnung vorgesehen, wobei die vierte Öffnung der zweiten Öffnung in Bezug auf den Mittelpunkt der Ulbricht-Kugel gegenüberliegt. Dadurch ist es vorteilhaft möglich, die Genauigkeit der Transmissionsmessung zu erhöhen, denn es können sowohl die totale Transmission (vierte Öffnung ist dann geschlossen) und die diffuse Transmission (vierte Öffnung ist dann geöffnet) in einfacher Weise gemessen werden. Dazu ist die Probe jeweils im Bereich der zweiten Öffnung angeordnet. Optional ist in der vierten Öffnung bzw. auf der der Innenseite der Ulbricht-Kugel abgewandten Seite der vierten Öffnung ein kalibrierter Referenzdetektor angeordnet. Dieser Referenzdetektor ermöglicht es, die Transmission und die spektrale Charakteristik des Messsystems zu bestimmen und zur weiteren Erhöhung der Messgenauigkeit in die Bestimmung der gewünschten Parameter (Quantenausbeute, Reflexion, Transmission) einfließen zu lassen. In dieser Ausführungsvariante ist der Referenzdetektor derart in der vierten Öffnung bzw. auf der der Innenseite der Ulbricht-Kugel abgewandten Seite der vierten Öffnung angeordnet, dass die aufgeprägte Signatur nach Entfernen der Probe aus der Ulbricht-Kugel dadurch gemessen werden kann, dass die Strahlung der Messlichtquelle durch die jeweils geöffnete zweite und vierte Öffnung der Ulbricht-Kugel ohne Wechselwirkung mit derselben detektiert wird. In einer alternativen Ausgestaltung ist es vorgesehen, dass der Referenzdetektor nicht im Bereich der vierten Öffnung, sondern neben der Ulbricht-Kugel angeordnet und das gesamte Messsystem auf einem Lineartisch linear zum Referenzdetektor verschiebbar angeordnet ist. Dann kann das gesamte Messsystem linear zur Messlichtquelle verschoben werden, so dass das Licht der Messlichtquelle wahlweise auf den Referenzdetektor oder auf den dritten Spiegel fällt.

Vorzugsweise ist im Bereich der vierten Öffnung ein Probenhalter, optional unter einem Winkel von 8°, angeordnet, wobei der Probenhalter auf der dem Innenraum der Ulbricht-Kugel zugewandten Seite des zweiten Detektors angeordnet ist. Dies ist vorteilhaft, da die Probe zur Bestimmung der Reflexion vorteilhafterweise im Bereich der vierten Öffnung angeordnet wird.

Vorzugsweise ist eine fünfte Öffnung vorgesehen, wobei in der fünften Öffnung optional ein dritter Detektor oder eine Lichtfalle angeordnet ist. Die fünfte Öffnung bildet einen so genannten Fresnel-Port aus, der die Intensität des von der Probe reflektierten Glanzreflexes bestimmt, wodurch die Genauigkeit der Bestimmung der Reflexion der Probe weiter erhöht werden kann. Dazu werden der Probenhalter im Bereich der vierten Öffnung und die Oberfläche der Probe derart auf die fünfte Öffnung eingestellt, dass die Reflexion der von der Messlichtquelle emittierten Messstrahlung an der (obersten) Oberfläche der Probe direkt in die fünfte Öffnung gelangt.

Beispielsweise weist jede der Öffnungen (erste bis sechste der Öffnung) eine Größe kleiner 5 % (bevorzugter kleiner als 2 %, noch bevorzugter kleiner als 1 %) der Oberfläche der Ulbricht-Kugel auf. Beispielsweise sind innerhalb der Ulbricht-Kugel Baffles angeordnet, um einen direkten Einfall des Mess- und Anregungslichtes auf den Detektor zu vermeiden.

Beschrieben hier wird ein Verfahren zur Bestimmung der Quantenausbeute und weiterer optischer Eigenschaften einer Probe unter Verwendung der zuvor (d. h. unter gleichen Messbedingungen, jedoch ohne die Probe) beschriebenen Vorrichtung . Das Verfahren, das nicht Teil der vorliegenden Erfindung ist, weist beispielsweise folgende Verfahrensschritte auf: Anordnen der Probe z. B. im Mittelpunkt der Ulbricht-Kugel, direktes Einstrahlen von Messstrahlung der Messlichtquelle in der zweiten Winkelstellung des dritten Spiegels durch die zweite Öffnung auf die Probe und Bestimmen eines ersten Spektrums der vom Detektor detektierten Strahlung, Entfernen der Probe aus der Ulbricht-Kugel, Einstrahlen von Messstrahlung der Messlichtquelle durch die zweite Öffnung in das Innere der Ulbricht-Kugel in gleicher Weise wie zuvor und Bestimmen eines zweiten Spektrums der vom Detektor detektierten Strahlung und Bestimmen der Quantenausbeute der Probe aus dem ersten detektierten Spektrum und dem zweiten detektierten Spektrum.

In diesem Fall sind beispielsweise lediglich die zweite und die dritte Öffnung der Ulbricht-Kugel geöffnet, alle anderen Öffnungen (erste, ggf. vierte bis sechste Öffnung) sind verschlossen. Das erste Spektrum mit der Probe beinhaltet die Absorption und Remission (beinhaltet Lumineszenz) der Probe, wobei das zweite Spektrum ohne Probe lediglich die Kugelantwort beinhaltet. Die gesuchten Parameter Absorption und Remission (beinhaltet Lumineszenz) der Probe können vorzugsweise durch Differenzbildung (das erste Spektrum wird vom zweiten Spektrum subtrahiert) bestimmt werden. Aus diesen Parametern kann dann die Photolumineszenzquantenausbeute bestimmt werden.

Beispielsweise wird die Probe zusätzlich im Bereich des Mittelpunktes der Ulbricht-Kugel angeordnet und eine Messstrahlung (Referenzstrahl) der Messlichtquelle wird in der ersten Winkelstellung des dritten Spiegels (über den dritten Spiegel und den ersten Spiegel) durch die erste Öffnung in das Innere der Ulbricht-Kugel (auf einen peripheren Punkt) eingestrahlt, wobei die Strahlung dann indirekt die Probe beleuchtet und ein drittes Spektrum der vom Detektor detektierten Strahlung bestimmt, wobei die Photolumineszenzquantenausbeute aus dem ersten detektierten Spektrum, dem zweiten detektierten Spektrum und dem dritten detektierten Spektrum bestimmt wird. Durch diese weitere Messung der Parameter Absorption und Remission (beinhaltet Lumineszenz) unter indirekter Beleuchtung kann die Genauigkeit der Messung für die Quantenausbeute weiter erhöht werden. (J.C. de Mello, Adv. Mater. 1997, 9, No. 3)

Zur Bestimmung der Transmission wird die Probe beispielsweise im Bereich der zweiten Öffnung angeordnet, wobei die ggf. vorhandene vierte Öffnung verschlossen wird. Messstrahlung der Messlichtquelle wird nachfolgend in der zweiten Winkelstellung des dritten Spiegels über die zweite Öffnung und durch die Probe hindurch in das Innere der Ulbricht-Kugel (auf den Mittelpunkt gerichtet) eingestrahlt und ein viertes Spektrum der vom Detektor detektierten Strahlung wird bestimmt, wobei die totale Transmission der Probe aus dem vierten detektierten Spektrum bestimmt wird.

Beispielsweise wird die Probe (ggf. weiterhin) im Bereich der zweiten Öffnung angeordnet, wobei die vierte Öffnung nun geöffnet wird und Messstrahlung der Messlichtquelle in der zweiten Winkelstellung des dritten Spiegels über die zweite Öffnung und durch die Probe in das Innere der Ulbricht-Kugel unter gleichen Bedingungen wie zuvor (d. h. unter gleichen Messbedingungen, jedoch mit geöffneter vierter Öffnung) eingestrahlt und ein fünftes Spektrum der vom Detektor detektierten Strahlung bestimmt wird. Die diffuse Transmission der Probe wird aus dem fünften detektierten Spektrum bestimmt. Beispielsweise wird die gerichtete Transmission der Probe mit hoher Genauigkeit aus dem vierten detektierten Spektrum und dem fünften detektierten Spektrum bestimmt.

Zur Bestimmung der Reflexion wird die Probe beispielsweise im Bereich der vierten Öffnung angeordnet und Messstrahlung der Messlichtquelle wird in der zweiten Winkelstellung des dritten Spiegels durch die zweite Öffnung in das Innere der Ulbricht-Kugel und direkt auf die Probe eingestrahlt. Nachfolgend wird ein sechstes Spektrum der vom Detektor detektierten Strahlung bestimmt, wobei die Reflexion der Probe aus dem sechsten detektierten Spektrum bestimmt wird.

Zur Erhöhung der Genauigkeit der Bestimmung der Transmission und Reflexion der Probe ist beispielsweise vorgesehen, dass die Probe im Bereich der zweiten bzw vierten Öffnung angeordnet wird (oder bleibt), und Messstrahlung der Messlichtquelle nun in der ersten Winkelstellung des dritten Spiegels durch die erste Öffnung in das Innere der Ulbricht-Kugel (peripherer Punkt) unter sonst gleichen Bedingungen wie zuvor (d. h. unter gleichen Messbedingungen, jedoch Einstrahlung durch die erste Öffnung) eingestrahlt und dadurch die Probe indirekt beleuchtet wird, und ein siebtes Spektrum der vom Detektor detektierten Strahlung bestimmt wird, wobei die Reflexion der Probe aus dem siebten detektierten Spektrum bestimmt wird.

Beispielsweise wird die Transmission der Probe aus dem vierten bzw. fünften detektierten Spektrum und dem siebten detektierten Spektrum bestimmt.

Beispielsweise wird die Reflexion der Probe aus dem sechsten detektierten Spektrum und dem siebten detektierten Spektrum bestimmt.

Beispielsweise wird ein achtes Spektrum der vom dritten Detektor an der fünften Öffnung detektierten Strahlung bestimmt, und die Reflexion der Probe aus dem sechsten detektierten Spektrum und dem achten detektierten Spektrum bestimmt (bzw. 6, 7, 8 Spektrum).

Die Erfindung wird nachstehend anhand von Ausführungsbeispielen näher beschrieben. Es zeigen:
- Fig. 1: ein Messsystem gemäß eines bevorzugten Ausführungsbeispiels der Erfindung zur Bestimmung der Quantenausbeute und weiterer optischer Eigenschaften einer Probe,
- Fig. 2, Fig. 3: das Messsystem nach Fig. 1 mit einer detaillierteren Ansicht der optischen Komponenten und der Ulbricht-Kugel,
- Fig. 4a: die Verwendung des Messsystems gemäß eines bevorzugten Ausführungsbeispiels der Erfindung nach den Fig. 1 bis 3 zur Bestimmung der Quantenausbeute bei direkter Beleuchtung der Probe,
- Fig. 4b: die Verwendung des Messsystems gemäß eines bevorzugten Ausführungsbeispiels der Erfindung nach den Fig. 1 bis 3 zur Bestimmung der Quantenausbeute bei indirekter Beleuchtung der Probe,
- Fig. 5a: die Verwendung des Messsystems gemäß eines bevorzugten Ausführungsbeispiels der Erfindung nach den Fig. 1 bis 3 zur Bestimmung der Reflexion bei direkter Beleuchtung der Probe,
- Fig. 5b: die Verwendung des Messsystems gemäß eines bevorzugten Ausführungsbeispiels der Erfindung nach den Fig. 1 bis 3 zur Bestimmung der Reflexion bei indirekter Beleuchtung der Probe,
- Fig. 6a: die Verwendung des Messsystems gemäß eines bevorzugten Ausführungsbeispiels der Erfindung nach den Fig. 1 bis 3 zur Bestimmung der totalen Transmission der Probe, und
- Fig. 6b: die Verwendung des Messsystems gemäß eines bevorzugten Ausführungsbeispiels der Erfindung nach den Fig. 1 bis 3 zur Bestimmung der diffusen Transmission der Probe.

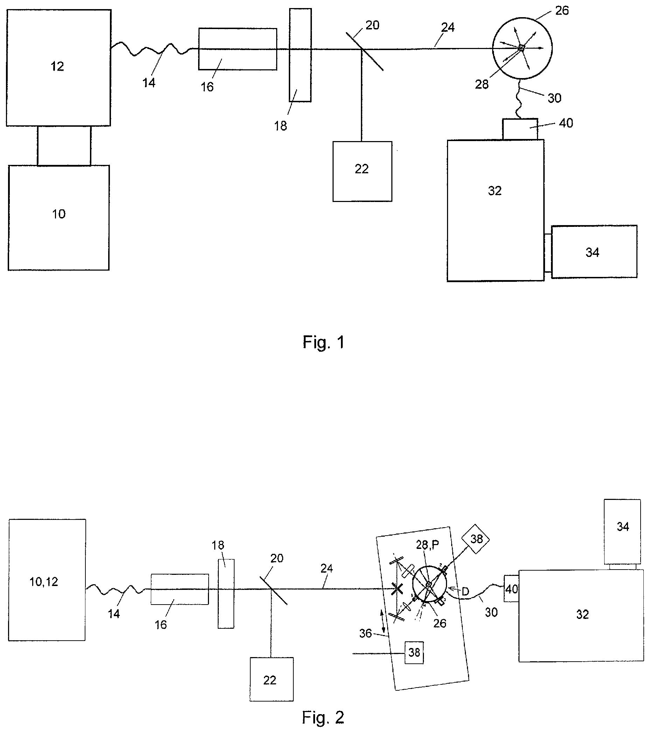

Fig. 1 bis 3 zeigen ein Messsystem gemäß eines bevorzugten Ausführungsbeispiels der Erfindung zur Bestimmung der Quantenausbeute und weiterer optischer Eigenschaften einer Probe 28. Das Messsystem weist in einer bevorzugten Ausführungsvariante eine Anregungseinheit mit den unten näher beschriebenen Komponenten 10, 12, 14, 16, 18, 20, 22, 24, S1, S2, S3, 42, 44, eine Ulbricht-Kugel 26 und eine Detektionseinheit mit den unten näher beschriebenen Komponenten 30, 32, 34, 40 auf.

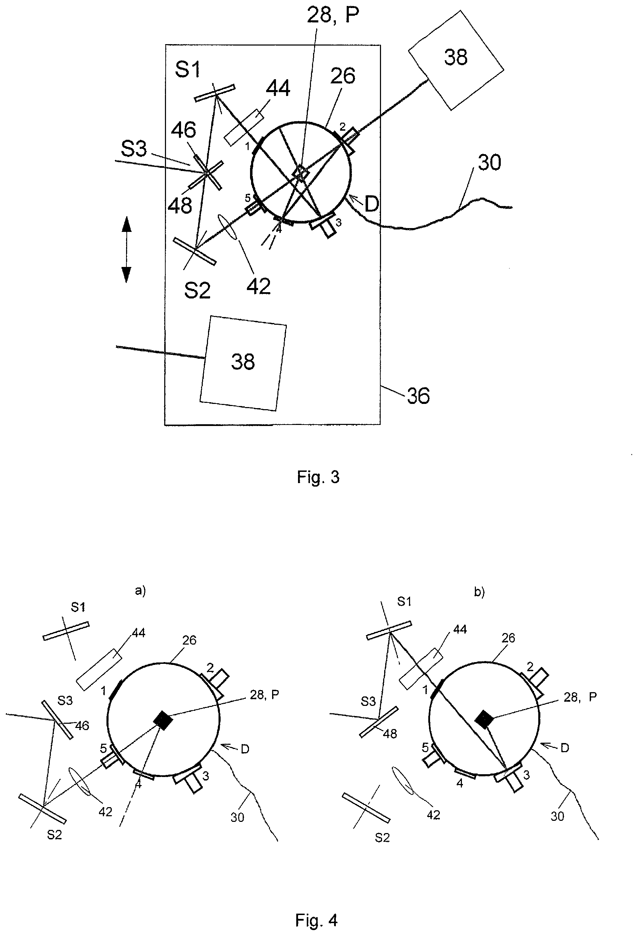

Die Anregungseinheit weist im vorliegenden Ausführungsbeispiel auf: eine Lampe 10, einen Wasserfilter (nicht dargestellt), einen Monochromator 12 (alternativ auch Laser, LED oder Laserdiode - auch mit der Möglichkeit UpConversions-Phosphore zu untersuchen), eine Anregungsfaser 14, ein optisches System 16 zur Kollimierung, ein Filterrad 18, ein Mittel 20 zur Auskopplung, Referenzierung bzw. zur Bestimmung der in die Kugel eingekoppelten Anregungslichtintensität mit einem Referenzdetektor 22 (vorzugsweise ein kalibrierter Detektor, der zur Bestimmung der spektralen Strahldichte aus drei gegeneinander im Winkel von 60° verdrehten Si-Dioden besteht, alternativ eine Si-Photodiode in einer Ulbrichtkugel, alternativ eine Si-Photodiode o. Ä.), einen schwenkbaren Drehspiegel S3 (Fig. 2 und 3), fest fixierte Umlenkspiegeln S1 und S2, optional ein optisches System 42 zur Fokussierung der Strahlung auf die Probe 28, einen Spalt 44 (oder alternativ ein anderes intensitätsregulierendes optisches Bauelement zur Anpassung der Referenzstrahlintensität) sowie einen weiteren Referenzdetektor 38 hinter bzw. neben der Ulbricht-Kugel 26 (kalibrierter Detektor).

Die Ulbrichtkugel 26, in die die Probe 28 eingebracht wird, weist eine erste Öffnung 1, eine zweite Öffnung 5, eine dritte Öffnung D, eine vierte Öffnung 2, eine fünfte Öffnung 4 und eine sechste Öffnung 3 sowie eine siebte Öffnung P (zum Einbringen der Probe und des Probenhalters) auf. Die Detektionseinheit weist ein Spektrometer 32, einen Detektor z. B. eine CCD-Zeile oder Photomultiplier oder Photodiode 34, einen Shutter 40, optional Ordnungsfilter (nicht dargestellt), optional Spalte (nicht dargestellt) und eine Detektionsfaser 30 auf.

Das Anregungslicht des Systems wird von der Lampe 10 mit vorgeschaltetem Monochromator 12 geliefert und von dort optional mittels eines Faserbündels 14 zum Messort transportiert. Vor der Faser 14 oder dem Monochromator 12 wird ein Shutter (nicht dargestellt) eingebaut, danach folgt die Kollimierung des Lichtes mittels der Einheit 16. Nach diesem Teil des Systems wird ein Teil des Lichts auf einen Referenzdetektor 22 gelenkt, so dass Schwankungen der Anregungsintensität registriert werden können. Der Messstrahl 24 geht weiter auf einen drehbaren Spiegel S3. Mit diesem Spiegel S3 ist die Aufteilung in einen Referenzstrahl (nach oben über S1) und einen Messstrahl/Probenstrahl (nach unten über S2) möglich, wobei die Strahlengänge gleich lang sind und gleiche Spiegel S1, S2 für die Einkopplung in die Kugel 26 verwendet werden. Die Anpassung der Fokussierung des Probenstrahls erfolgt optional mit einem optischen System 42; die Anpassung der Intensität des Referenzstrahls erfolgt optional mit einem zusätzlichen motorisierten Spalt 44.

Die Probe 28 befindet sich zur Bestimmung der Quantenausbeute in der Mitte oder an Öffnung 4 der Ulbricht-Kugel 26 und emittiert Lumineszenzlicht. Das Licht, das die Ulbricht-Kugel 26 passiert, wird über die dritte Öffnung D der Ulbricht-Kugel 26 mit einer Detektionsfaser 30 gesammelt und zur Detektionseinheit 32, 34 transportiert.

In Fig. 2 wird das von der Lampe 10 kommende Licht kollimiert und ggf. mit Filtern 18 gedämpft (für eine Kalibrierungsroutine). Ein Teil des Lichts wird anschließend für die Referenzierung mittels der Elemente 20, 22 verwendet. Dann wird das Licht 24 über den drehbaren Spiegel S3 zur Ulbricht-Kugel 26 geleitet. Der Aufbau der Ulbricht-Kugel 26 selbst ist in Fig. 2 und 3 detailliert dargestellt.

Der drehbare Spiegel S3 ermöglicht die Aufteilung in einen Proben- bzw. Referenzstrahl.

Vorzugsweise sind beide Strahlengänge gleich lang und es werden gleiche oder ähnliche fest stehende Spiegel S1, S2 verwendet. Für die Referenzmessung der Anregungsintensität sind zwei Varianten vorgesehen: in Variante 1 sind die Ulbricht-Kugel 26 und der Referenzdetektor 38 auf einem Lineartisch 36 angebracht und können durch Verschieben des Tisches 36 am direkten Messort ausgetauscht werden, in Variante 2 wird die Leistung durch die Ulbricht-Kugel 26 hindurch gemessen, d. h. es wird tatsächlich nur einer der beiden in Fig. 3 eingezeichneten Referenzdetektoren 38 verwendet.

Der erfindungsgemäße Aufbau der Ulbricht-Kugel 26 beinhaltet die Anzahl und die Anordnung der Ports (erste bis siebte Öffnung) und der Beleuchtungssituation innerhalb der Ulbricht-Kugel 26 mit und ohne Probe 28.

In den Fig. 4a - 6b sind die Strahlengänge für die verschiedenen exemplarischen Messmodi schematisch dargestellt.

Die fünfte Öffnung (Port 2) der Ulbricht-Kugel 26 ist der Probenport für Reflexionsmessungen, Port 3 (sechste Öffnung) ist der Referenzport und Port 5 (zweite Öffnung) ist der Probenport für Transmissionsmessungen. Für die Quantenausbeutemessungen wird die Probe mit Probenhalter von oben durch Port 7 in die Ulbricht-Kugel 26 eingebracht oder an Port 2 positioniert und durch Port 5 bestrahlt, so dass Port 4 als Fresnel-Port (so genannter Glanzreflex) für die Quantenausbeute- bzw. Reflexionsmessungen dient.

Die Probe 28 wird für die Messung der Photolumineszenzquantenausbeute (Fig. 4a und 4b) von oben (Nordpol, Port 7) in die Kugel eingebracht oder an Port 2 positioniert. Es wird eine Messung unter direkter Beleuchtung wie in Fig. 4a vorgenommen. Weiterhin wird eine Messung unter gleichen Bedingungen wie in Fig. 4a, jedoch ohne Probe 28, vorgenommen. Daraus kann die Quantenausbeute mittels eines Datenverarbeitungsgeräts (nicht dargestellt) bestimmt werden. Zusätzlich kann durch Umschwenken des Spiegels S3 eine Messung unter indirekter Beleuchtung (Referenzstrahl) wie in Fig. 4b vorgenommen werden, wodurch die Genauigkeit der Bestimmung der Quantenausbeute erhöht werden kann.

Hierin werden unterschiedliche Probenhalter beschrieben. Ein Halter hat eine Klemmvorrichtung, so dass z. B. Schichten oder Gläser befestigt werden können, ein anderer Halter ermöglicht die Fixierung von Standard-Glasküvetten (10×10mm²), die mit flüssigen Proben wie z. B. transparenten Farbstofflösungen, kolloidalen Lösungen oder Partikel- oder Zellsuspensionen gefüllt werden können. Ein dritter Halter ermöglicht die Aufnahme von runden, festen Proben wie z. B. Gläsern, Polymersystemen, Presslingen oder runden Glasküvetten variabler Schichtdicke, die wiederum mit flüssigen und festen Proben gefüllt werden können. Ein vierter Halter ermöglicht die Aufnahme von runden, festen Proben wie z. B. Gläsern, Polymersystemen, Presslingen oder runden Glasküvetten variabler Schichtdicke, die wiederum mit flüssigen und festen Proben gefüllt werden können und an der Außenseite der Ulbrichtkugel 26 durch ein Halterungssystem (optische Schienen) fixiert werden können.

Prinzipiell kann das Messsystem auch so ausgelegt werden, dass nicht nur Messungen an photolumineszenten Proben möglich sind, sondern z. B. Messungen an elektrolumineszenten, tribolumineszenten oder chemolumineszenten Systemen möglich sind.

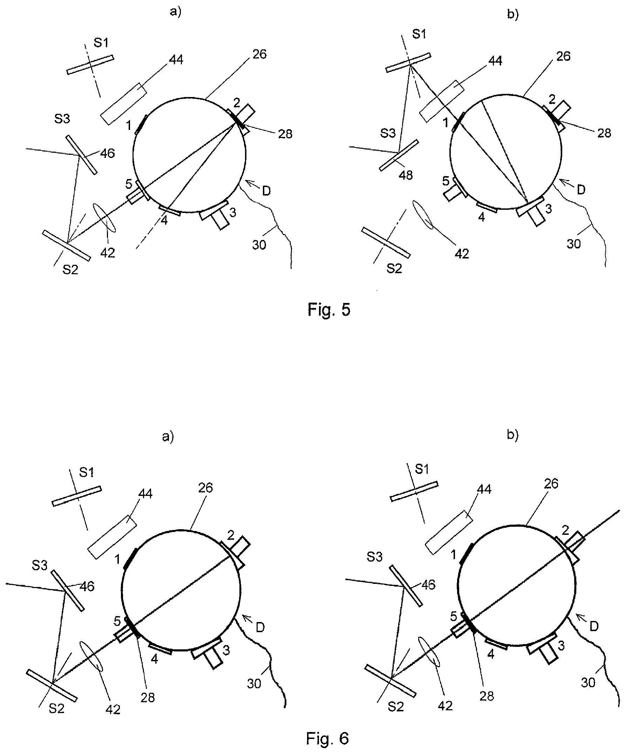

Für die Messung der Reflexion und Transmission können die Proben wie in Fig. 5a und 5b (Reflexion) bzw. wie in Fig. 6a und 6b (Transmission) in bzw. vor den Öffnungen der Ulbricht-Kugel 26 auf den dort befestigten optischen Schienen mittels Probenhaltern positioniert werden. Hierfür werden beispielsweise zwei verschiedene Probenhalter vorgesehen, die die Aufnahme von verschieden großen, runden Dünnschichtküvetten (z. B.: Probenraum Ø1~23mm, Ø2~15mm, Dicken 0,05; 0,1; 02; 0,5; 1 und 2,5 mm) ermöglichen. Die Proben können in diese Dünnschichtküvetten fest, pulvrig, als Presslinge oder flüssig eingebracht werden.

Eine erste Kalibrierung erfolgt beispielsweise durch Rückführung des in die Ulbricht-Kugel 26 eingestrahlten Strahlungsflusses auf ein Primär- bzw. Sekundärnormal wie z. B. eine Wolframbandlampe integriert in einer Ulbrichtkugel. Hier ist zu beachten, dass ausreichend hohe Strahlungsflüsse erreicht werden. Weitere regelmäßige Kalibrierungen können mit dem Referenzdetektor 38 auf einem Lineartisch 36 durchgeführt werden.

Die Berechnung der Quanteneffizienz erfolgt beispielsweise durch Division der ermittelten Zahl absorbierter Photonen durch die ermittelte Zahl der emittierten Photonen. Die Zahl absorbierter Photonen und die Zahl emittierter Photonen werden aus den detektierten Spektren ermittelt. Die Trennung von Emissions- und Anregungslicht erfolgt wahlweise manuell oder durch die Software. Eine Reabsorptionskorrektur ist möglich. Diese Routine kann in einer entsprechenden Software des Datenverarbeitungsgerätes hinterlegt werden.

Aus den gemessenen Reflektions- und Transmissionsspektren können durch eine Monte Carlo Simulation die optischen Parameter der Proben Absorptionskoeffizient (µa) Streukoeffizient (µs) und der Anisotropiefaktor (g) ermittelt werden.

### Bezugszeichenliste

- S1: erster Spiegel
- S2: zweiter Spiegel
- S3: dritter Spiegel
- D: dritte Öffnung der Ulbricht-Kugel
- P: siebte Öffnung der Ulbrichtkugel

- 1: erste Öffnung der Ulbricht-Kugel
- 2: vierte Öffnung der Ulbricht-Kugel
- 3: sechste Öffnung der Ulbricht-Kugel
- 4: fünfte Öffnung der Ulbricht-Kugel
- 5: zweite Öffnung der Ulbricht-Kugel

- 10: Messlichtquelle
- 12: Monochromator
- 14: Anregungsfaser
- 16: optische Strahlführung zur Kollimierung
- 18: Filterrad
- 20: Mittel zur Auskopplung für Referenzmessung
- 22: Referenzdetektor
- 24: kollimierter Strahl
- 30: Detektionsfaser
- 32: Spektrometer
- 34: Detektor
- 36: Lineartisch
- 38: Referenzdetektor
- 40: Shutter
- 42: Spalt
- 44: Linsensystem
- 46: zweite Winkelstellung des dritten Spiegels
- 48: erste Winkelstellung des dritten Spiegels

## Patentansprüche

1. Vorrichtung zur Bestimmung der Photolumineszenzquantenausbeute und optischer Eigenschaften einer Probe (28), aufweisend:
eine Messlichtquelle (10), die eingerichtet ist, eine Messstrahlung zu emittieren,
eine Ulbricht-Kugel (26), wobei die Ulbricht-Kugel (26) eine erste Öffnung (1) zur Einstrahlung der Messstrahlung, eine davon beabstandete, zweite Öffnung (5) zur Einstrahlung der Messstrahlung und eine dritte Öffnung (D) zur Auskopplung eines Messsignals aufweist,
einen Probenhalter, der geeignet ist, eine Probe (28) im Mittelpunkt der Ulbricht-Kugel (26) zu halten,
einen spektral auflösenden Detektor (32, 34), wobei der spektral auflösende Detektor (32, 34) mit der dritten Öffnung (D) verbunden ist,
wobei ein erster Spiegel (S1), ein zweiter Spiegel (S2) und ein dritter Spiegel (S3) vorgesehen sind, wobei der erste Spiegel (S1) und der zweite Spiegel (32) in Bezug auf die Ulbricht-Kugel (26) fixiert sind und der dritte Spiegel (S3) drehbar um eine Drehachse ist,
und wobei erster Spiegel (S1), zweiter Spiegel (S2) und dritter Spiegel (S3) derart angeordnet sind, dass die von der Messlichtquelle (10) emittierte Messstrahlung in einer ersten
Winkelstellung (48) des dritten Spiegels (S3) vom dritten Spiegel (S3) zum ersten Spiegel (S1) und nachfolgend vom ersten Spiegel (S1) durch die erste Öffnung (1) in die Ulbricht-Kugel (26) reflektiert und in einer zweiten Winkelstellung (46) des dritten Spiegels (S3) vom dritten Spiegel (3) zum zweiten Spiegel (S2) und nachfolgend vom zweiten Spiegel (S2) durch die zweite Öffnung (5) zur direkten Beleuchtung der Probe in die Ulbricht-Kugel (26) reflektiert wird, wobei der erste Spiegel (S1) derart in Relation zur Drehachse des dritten Spiegels (S3) und
zur ersten Öffnung (1) der Ulbricht-Kugel (26) angeordnet ist, dass die von der Messlichtquelle (10) emittierte Messstrahlung in der ersten Winkelstellung (48) des dritten Spiegels (S3) vom dritten Spiegel (S3) über den ersten Spiegel (S1) und durch die erste Öffnung (1) in einen peripheren Punkt auf der Innenseite der Ulbricht-Kugel (26) reflektiert wird, wobei der periphere Punkt, der Mittelpunkt und die erste Öffnung (1) der Ulbricht-Kugel (26) nicht auf einer Linie angeordnet sind.

2. Vorrichtung nach Anspruch 1,
wobei der zweite Spiegel (S2) derart in Relation zur Drehachse des dritten Spiegels (S3) und zur zweiten Öffnung (5) der Ulbricht-Kugel (26) angeordnet ist, dass die von der Messlichtquelle (10) emittierte Messstrahlung in der zweiten Winkelstellung (46) des dritten Spiegels (S3) vom dritten Spiegel (S3) über den zweiten Spiegel (S2) und durch die zweite Öffnung (5) in den Mittelpunkt der Ulbricht-Kugel (26) reflektiert wird.

3. Vorrichtung nach Anspruch 1 oder 2,
wobei in dem peripheren Punkt der Ulbricht-Kugel (26) eine sechste Öffnung (3) mit einem Referenzdetektor angeordnet ist.

4. Vorrichtung nach einem der vorhergehenden Ansprüche,
wobei zwischen der Messlichtquelle (10) und dem dritten Spiegel ($3) ein Kollimator oder ein Linsen- bzw. Spiegelsystem (16) zur Kollimierung der von der Messlichtquelle emittierten Messstrahlung angeordnet ist und/oder zwischen der Messlichtquelle (10) und dem dritten Spiegel (S3) ein Monochromator (12) zur Isolierung einer bestimmten Wellenlänge der von der Messlichtquelle emittierten Messstrahlung angeordnet ist.

5. Vorrichtung nach einem der vorhergehenden Ansprüche,
wobei eine vierte Öffnung (2) vorgesehen ist, wobei die vierte Öffnung (2) der zweiten Öffnung (5) in Bezug auf den Mittelpunkt der Ulbricht-Kugel (26) gegenüberliegt, und wobei ein zweiter Detektor (38) auf einer Achse, die durch den Mittelpunkt der Ulbricht-Kugel (26) und die vierte Öffnung (2) definiert ist, auf der dem Mittelpunkt der Ulbricht-Kugel (26) abgewandten Seite der vierten Öffnung (2) angeordnet ist.

6. Vorrichtung nach Anspruch 5,
wobei im Bereich der vierten Öffnung (2) ein Probenhalter angeordnet ist, wobei der Probenhalter auf der dem Innenraum der Ulbricht-Kugel (26) zugewandten Seite des zweiten Detektors (38) angeordnet ist.

7. Vorrichtung nach einem der vorhergehenden Ansprüche,
wobei eine fünfte Öffnung (4) vorgesehen ist, wobei in der fünften Öffnung (4) ein dritter Detektor oder eine Lichtfalle angeordnet ist.

8. Vorrichtung nach einem der vorhergehenden Ansprüche,
wobei an der zweiten Öffnung (5) ein Probenhalter angeordnet ist.

## Claims

1. Device for determining the photoluminescence quantum yield and optical properties of a sample (28), comprising:
a measuring-light source (10), which is configured to emit a measuring radiation,
an integrating sphere (26), the integrating sphere (26) comprising a first opening (1) for the measuring radiation to radiate in, a second opening (5) at a distance from said first opening for the measuring radiation to radiate in, and a third opening (D) for decoupling a measured signal,
a sample holder that is suitable for holding a sample (28) in the center of the integrating sphere (26),
a spectrally resolving detector (32, 34), the spectrally resolving detector (32, 34) being connected to the third opening (D),
wherein a first mirror (S1), a second mirror (S2), and a third mirror (S3) are provided, the first mirror (S1) and the second mirror (32) being fixed in relation to the integrating sphere (26) and the third mirror (S3) being rotatable about an axis of rotation,
and wherein the first mirror (S1), the second mirror (S2), and the third mirror (S3) are arranged such that the measuring radiation emitted by the measuring-light source (10) is reflected from the third mirror (S3) to the first mirror (S1) and then from the first mirror (S1) through the first opening (1) into the integrating sphere (26) in a first angular position (48) of the third mirror (S3), and is reflected from the third mirror (3) to the second mirror (S2) and then from the second mirror (S2) through the second opening (5), for directly illuminating the sample, into the integrating sphere (26) in a second angular position (46) of the third mirror (S3),
wherein the first mirror (S1) is arranged in relation to the axis of rotation of the third mirror (S3) and to the first opening (1) in the integrating sphere (26) such that the measuring radiation emitted by the measuring-light source (10) is reflected from the third mirror (S3) via the first mirror (S1) and through the first opening (S1) into a peripheral point on the inside of the integrating sphere (26) in the first angular position (48) of the third mirror (S3), the peripheral point, the center, and the first opening (1) in the integrating sphere (26) not being arranged on one line.

2. Device according to claim 1,
wherein the second mirror (S2) is arranged in relation to the axis of rotation of the third mirror (S3) and to the second opening (5) in the integrating sphere (26) such that the measuring radiation emitted by the measuring-light source (10) is reflected from the third mirror (S3) via the second mirror (S2) and through the second opening (5) into the center of the integrating sphere (26) in the second angular position (46) of the third mirror (S3).

3. Device according to claim 1 or 2,
wherein a sixth opening (3) comprising a reference detector is arranged in the peripheral point of the integrating sphere (26).

4. Device according to any of the preceding claims,
wherein a collimator or a lens or mirror system (16) for collimating the measuring radiation emitted by the measuring-light source is arranged between the measuring-light source (10) and the third mirror (S3) and/or a monochromator (12) for isolating a certain wavelength of the measuring radiation emitted by the measuring-light source is arranged between the measuring-light source (10) and the third mirror (S3).

5. Device according to any of the preceding claims,
wherein a fourth opening (2) is provided, the fourth opening (2) being opposite the second opening (5) in relation to the center of the integrating sphere (26), and wherein a second detector (38) is on an axis defined by the center of the integrating sphere (26) and the fourth opening (2), on which the side of the fourth opening (2) facing away from the center of the integrating sphere (26) is arranged.

6. Device according to claim 5,
wherein a sample holder is arranged in the region of the fourth opening (2), the sample holder being arranged on the side of the second detector (38) facing the interior of the integrating sphere (26).

7. Device according to any of the preceding claims,
wherein a fifth opening (4) is provided, a third detector or a light trap being arranged in the fifth opening (4).

8. Device according to any of the preceding claims,
wherein a sample holder is arranged on the second opening (5).

## Revendications

1. Dispositif pour la détermination du rendement quantique de photoluminescence et de propriétés optiques d'un échantillon (28), comprenant :
une source de lumière de mesure (10) qui est conçue pour émettre un rayonnement de mesure,
une sphère intégrante (26), dans lequel la sphère intégrante (26) comprend une première ouverture (1) pour l'introduction du rayonnement de mesure, une deuxième ouverture (5), distante de celle-ci, pour l'introduction du rayonnement de mesure, et une troisième ouverture (D) pour la sortie d'un signal de mesure,
un support d'échantillon qui est conçu pour maintenir un échantillon (28) au centre de la sphère intégrante (26),
un détecteur à résolution spectrale (32, 34), dans lequel le détecteur à résolution spectrale (32, 34) est relié avec la troisième ouverture (D) ;
dans lequel un premier miroir (S1), un deuxième miroir (S2) et un troisième miroir (S3) sont prévus, dans lequel le premier miroir (S1) et le deuxième miroir (S2) sont fixes par rapport à la sphère intégrante (26) et le troisième miroir (S3) peut tourner autour d'un axe de rotation,
et dans lequel le premier miroir (S1), le deuxième miroir (S2) et le troisième miroir (S3) sont disposés de façon à ce que le rayonnement de mesure émis par la source de lumière de mesure (10) est réfléchie, dans une première position angulaire (48) du troisième miroir (S3), par le troisième miroir (S3) vers le premier miroir (S1) puis par le premier miroir (S1) à travers la première ouverture (1) dans la sphère intégrante (26) et, dans une deuxième position angulaire (46) du troisième miroir (S3), par le troisième miroir (S3) vers le deuxième miroir (S2) puis par le deuxième miroir (S2) à travers la deuxième ouverture (5) pour l'éclairage direct de l'échantillon dans la sphère intégrante (26),
dans lequel le premier miroir (S1) est disposé par rapport à l'axe de rotation du troisième miroir (S3) et par rapport à la première ouverture (1) de la sphère intégrante (26) de façon à ce que le rayonnement de mesure émis par la source de lumière de mesure (10) est réfléchi, dans la première position angulaire (48) du troisième miroir (S3), par le troisième miroir (S3), par l'intermédiaire du premier miroir (S1) et à travers la première ouverture (1), vers un point périphérique sur le côté intérieur de la sphère intégrante (26), dans lequel le point périphérique, le centre et la première ouverture (1) de la sphère intégrante (26) ne sont pas disposés sur une ligne.

2. Dispositif selon la revendication 1,
dans lequel le deuxième miroir (S2) est disposé par rapport à l'axe de rotation du troisième miroir (S3) et par rapport à la deuxième ouverture (5) de la sphère intégrante (26) de façon à ce que le rayonnement de mesure émis par la source de lumière de mesure (10) soit réfléchi, dans la deuxième position angulaire (46) du troisième miroir (S3), par le troisième miroir (S3) par l'intermédiaire du deuxième miroir (S2) et à travers la deuxième ouverture (5) au centre de la sphère intégrante (26).

3. Dispositif selon la revendication 1 ou 2,
dans lequel, au point périphérique de la sphère intégrante (26) est disposée une sixième ouverture (3) avec un détecteur de référence.

4. Dispositif selon l'une des revendications précédentes,
dans lequel, entre la source de lumière de mesure (10) et le troisième miroir (S3), est disposé un collimateur ou un système de lentilles ou de miroirs (16) pour la collimation du rayonnement de mesure émis par la source de lumière de mesure et/ou, entre la source de lumière de mesure (10) et le troisième miroir (S3) est disposé un monochromateur (12) pour l'isolation d'une longueur d'onde déterminée du rayonnement de mesure émis par la source de lumière de mesure.

5. Dispositif selon l'une des revendications précédentes,
dans lequel une quatrième ouverture (2) est prévue, dans lequel la quatrième ouverture (2) est disposée face à la deuxième ouverture (5) par rapport au centre de la sphère intégrante (26) et
dans lequel un deuxième détecteur (38) est disposé sur un axe, qui est défini par le centre de la sphère intégrante (26) et la quatrième ouverture (2), sur le côté de la quatrième ouverture (2), opposé au centre de la sphère intégrante (26).

6. Dispositif selon la revendication 5,
dans lequel, au niveau de la quatrième ouverture (2) est disposé un support d'échantillon, dans lequel le support d'échantillon est disposé sur le côté du deuxième détecteur (38) orienté vers l'intérieur de la sphère intégrante (26).

7. Dispositif selon l'une des revendications précédentes,
dans lequel une cinquième ouverture (4) est prévue, dans lequel, dans la cinquième ouverture (4), est disposé un troisième détecteur ou un piège à lumière.

8. Dispositif selon l'une des revendications précédentes,
dans lequel, sur la deuxième ouverture (5), est disposé un support d'échantillon.
